# EUROPEAN PATENT SPECIFICATION

(11) **EP 1 806 963 B1**
(45) Date of publication and mention of the grant of the patent: **12.03.2008**
(21) Application number: 05812634.3
(22) Date of filing: 21.09.2005
(51) Int. Cl.: A01K 61/00

(54) **A BASKET FOR SHELLFISH FARMING**
KORB FÜR SCHALENTIERZUCHT
PANIER POUR CONCHYLICULTURE

(30) Priority: 27.09.2004 IT RE20040115
(43) Date of publication of application: 18.07.2007
(73) Proprietor: ACQUA & CO. SRL, 42023 Cadelbosco di Sopra (IT); ISTITUTO DELTA ECOLOGIA APPLICATA SRL, 44100 Ferrara (IT)
(72) Inventor: MAGNANINI, Giovanni, 42100 Reggio Emilia (IT); TUROLLA, Edoardo, 44020 Goro (FE) (IT)
(74) Representative: Gotra, Stefano
(86) International application number: PCT/IB2005/003105
(87) International publication number: WO 2006/035314

(56) References cited:
- FR-A- 2 376 623
- GB-A- 1 399 933
- US-A- 3 870 019
- US-A- 4 377 987
- US-A- 5 515 813

## Description

### Technical Field

The invention relates to a basket for shellfish farming. The invention is applicable to the field of shellfish farming in the sea or ocean, and relates to mussels, cockles, oysters and others besides.

### Background Art

The growing demand for shellfish for restaurants has led to a need to increase production. Industrial processes have had to be developed to meet this demand. These farming methods sometimes consist in the use of a rigid or flexible box-type recipient made from a perforated structure for water flow; shellfish seeds are placed inside the recipient.

Once the container is in the open sea or ocean it is left for periods varying from 3 to 36 months, the time necessary for the shellfish to reach marketable size. Thereafter the container is collected from the sea or ocean and the shellfish harvested and sold on to distributors.

The prior art includes various types of differentiated containers, mainly different in shape and type of shellfish which they can contain and therefore cultivate.

For example the prior art describes a container, known as a "poche", which is suitable for oyster fattening; these molluscs require large spaces to grow, which in this case are constituted by a double net of rectangular perimeter sewed at sides to form a sack.

These containers are fixed in place by means of two or more supports positioned on the sea bed to keep the containers 30-40 centimetres above the bottom. They are practically horizontally positioned.

To obtain a correct growth of the shellfish, the containers need to be manually turned almost daily; they are therefore time-consuming to use.

Another similar solution is the use of a perforated basket, rigid and cylindrical, which is stably fixed on uprights on the sea bed, and is therefore suited to shallow waters.

The volume of these baskets causes an excessively high upwards growth of the shellfish, producing a shape which is not preferred by the market.

Also, obviously, the above basket can only be used near the coast and not in open sea.

A further prior-art system is constituted by a flexible container, technically known as a "lantern", which is substantially a cylindrical tubular net.

Inside the lantern is a column of disc elements, which are rigid rings having a further net covering the area below the rigid ring - which all produces various levels for cultivation purposes.

When the seedlings are placed on the levels, the lantern is closed and positioned in the farming location.

During their growth the shellfish can invade and even grow around the net, which produces the disadvantage, during harvesting, of damaging both the product and the nets themselves and possibly compromising their re-use.

To resolve the above problems, farming methods used in the open ocean use flexible containers; the prior art includes a rigid basket made of plastic which is cylindrical and superiorly open with a predominant development of the diameter with respect to the height.

Each basket, which can be stacked on others using a cylindrical bar coupled to the axis of the basket, exhibits various separators which subdivide the volume of the basket into four circumferential segments. Shellfish seed is placed in each segment.

These baskets are made by a single-acting 350-tonne press in a single pressing operation. This manufacturing process produces baskets having a maximum diameter of 45 cm, internally of which a maximum of 5 kg of shellfish for each basket can be produced, which makes these systems poorly productive.

Further, the conformation of the baskets is extremely negative for the manufacturer in terms of transport costs and warehousing, given the large spaces taken up by these systems.

The main aim of the present invention is to realise a basket which has a greater capacity than those at present on the market, and thus to increase productive volume of shellfish without having to use larger presses to manufacture the baskets than are already in use.

A further aim of the invention is to realise a basket which is capable of minimising the transport costs and warehouse storing costs.

These aims and advantages, and more besides, are all attained by the invention, as it is characterised in the appended claims.

### Disclosure of Invention

The invention will now be described in more detail with reference to the figures of the drawings, which illustrate a preferred form of embodiment thereof.

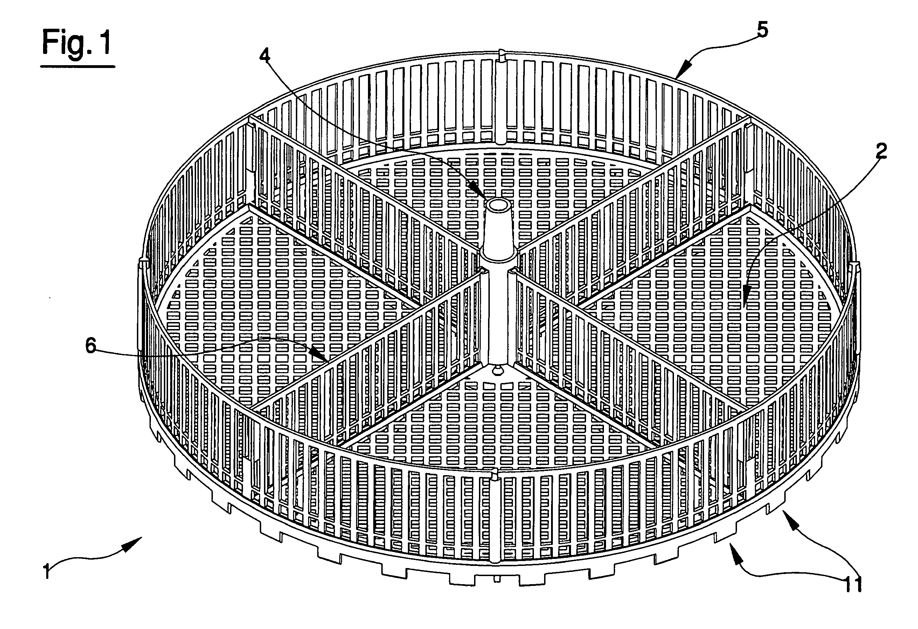

Figure 1 is a perspective view of the device of the present invention;

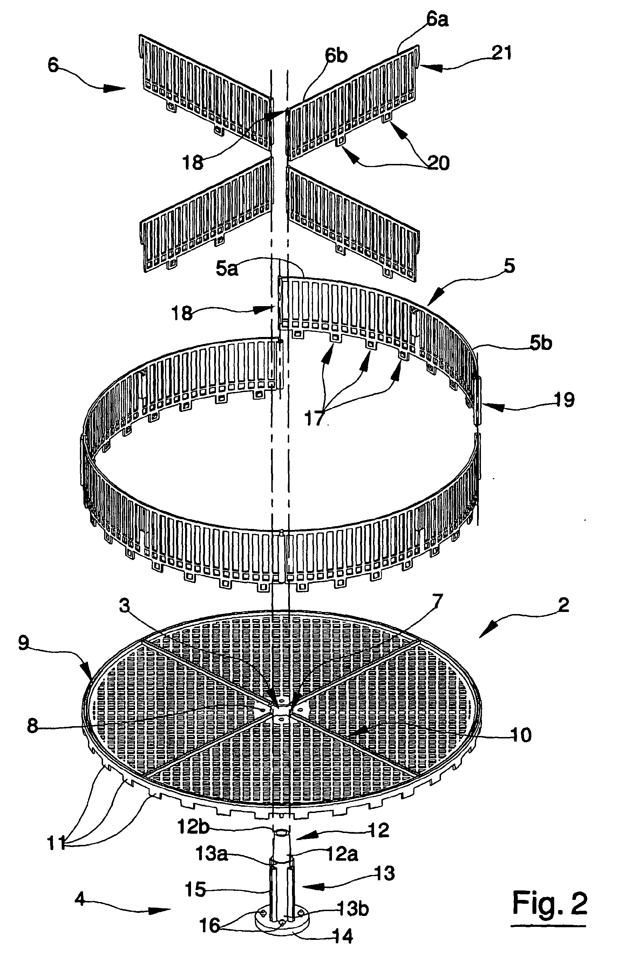

Figure 2 is an exploded perspective view of the various components defining a basket for farming the shellfish in water;
Figure 3 is a diameter section of a plurality of baskets configured in a column. With reference to the figures of the drawings, 1 denotes in its entirety a basket for cultivation of shellfish.

The basket 1 is cylindrical with predominantly diametric development with respect to the height thereof, and exhibits at a base thereof a perforated disc element 2. The average size of the holes will be in the order of a square centimetre, a compromise since a larger size would not be big enough to keep the seed while a smaller size would create a greater obstacle to the circulation of water.

The disc element 2, which is preferably circular, exhibits a central hole 3 having at least a notch 7 located at the diameter of the central hole 3 and developing from the periphery of the central hole 3 externalwise thereof.

In the preferred embodiment of the figures of the drawings there are four notches 7 located at the cardinal points of the central hole 3 and exhibiting a similar development to the previous notch.

A plurality of holes 8 are afforded externally of the central hole 3; the plurality of holes 8 are preferably staggered by 45° with respect to the notches 7.

Each hole of the plurality of holes 8 has a centre lying on a same concentric circumference to the central hole 3 and has a greater diameter than the central hole 3.

In proximity of the periphery of the disc element 2 there is a plurality of small circumferential eyelets 9, preferably square in shape.

A plurality of radially-developing eyelets are also afforded on the disc element 2. These can be two eyelets for each spoke, as in the figures of the drawings.

In the preferred embodiment the plurality of radial eyelets 10 develops along four angular radial lines set at staggers of 90°.

At the periphery of the disc element 2 there is a plurality of centring elements 11 forming a regular cogging having a direction of development that extends from the bottom plane of the disc element 2, downwards when the disc element 2 is positioned horizontally.

As stiffening elements and also guides for the correct trim in a stack of several baskets 1, at least a pair of spokes 22 are included, inferiorly of the disc element 2, each of which spokes 22 has a linear parallelepiped development with a vertical development which is smaller with respect to the vertical development of the plurality of centring elements 11.

The pair of spokes 22 each exhibits a first end 22a which is close to the central hole 3 of the disc element 2 and a second end 22b which terminates in proximity of the external diameter of the disc element 2.

At the second end 22b the spoke 22 exhibits a wedge-shaped rise 23 having a vertical development which is more or less equal to the plurality of centring elements 11.

The disc element 2 is coupled to at least a lateral containing wall 5 in order to give the basket 1 the shape of a cup-shaped container, open superiorly and having a bottom and lateral walls that are perforated to enable circulation of water internally thereof.

The perimeter container wall 5, preferably rectangular and made of flexible plastic, when disconnected from the disc element 2 is flat and linear.

The container wall 5 has at a first end 5a, corresponding to a short side of rectangular perimeter, a shaped element 18 and at an opposite end 5b, corresponding to the short side opposite the previous one, a guide 19 having a countershaped profile to the shaped element 18, and is therefore couplable to the shaped element 18.

The container wall 5 inferiorly exhibits a plurality of hooks 17 able to be coupled by pressure to the plurality of circumferential eyelets 9 of the disc element 2.

The volume of the disc element 2 together with at least a container wall 5 is subdividable into two or more circumferential segments by the application on the disc element 2, by a pressure fit, of at least a separating wall 6.

The at least a separator 6, having a perforated conformation similar to that of the container wall 5, exhibits a length which is equal to the distance between the periphery of the central hole 3 and the external diameter of the disc element 2 corresponding to the radius of the disc element 2.

The separator wall 6 inferiorly exhibits a second plurality of hooks 20 which are couplable by pressure fit to the plurality of radial eyelets 10 of the disc element 2, and terminates on a first side 6a with a hooking body 21, shaped as a hook, which can abut against the container wall 5 to strengthen the positioning thereof on the inside of the basket 1, and on a second side 6b, opposite the first side 6a, with the shaped profile 18 equal to the one on the lateral container wall 5.

A support hub 4 is couplable to the central hole 3 of the disc element 2.

The hub 4 illustrated in the figures of the drawings is a single discrete element, but in a further embodiment could be made in a single piece with the disc element 2.

The hub 4 is made of a first tubular tract 12 having a truncoconical conformation and a second tubular tract 13 having a truncocylindrical conformation.

The first tubular tract 12 is vertically orientated so that a smaller diameter 12b thereof is higher than a greater diameter 12a thereof.

At the greater diameter 12a of the first tubular tract 12 the support hub 4 is joined to the second tubular tract 13, through a first end 23a, thus changing the geometrical conformation.

At the second end 13b of the second tubular tract 13 the support hub 4 newly changes geometrical conformation, terminating with a base flange 14.

At least a tab 15, preferably four, is present along the lateral wall of the second tubular tract 13. The tab 15 is couplable to the notch 7 of the central hole 3 belonging to the disc element 2, and has a similar conformation to the guide 19 on the end 5b of the lateral container wall 5, which can be coupled to the shaped profile 18 on the second side 6a of the separator wall 6.

A plurality of pins 16 are positioned at the flange 14, to couple by pressure fit in the plurality of holes 8 located on the disc element 2.

The invention functions as follows.

The single components obtained by press-forming, i.e. the disc element 2, at least a container wall 5, at least a separator wall 6 and a support hub 4, are assembled to form the basket 1.

With the container wall 5 the gradual coupling of the first plurality of hooks 17 to the plurality of circumferential eyelets 9 on the edge of the disc element 2 is performed.

Before finishing the pressure-fitting of the last hook of the plurality of hooks 17 on the eyelet of the plurality of circumferential eyelets 9, the shaped profile 18 on the first end 5a of the container wall 5 is coupled with the guide 19 on the opposite end 5b thereof .

The container wall 5 is deformed from flat to arched so that it defines an annular body.

If the external diameter of the disc element 2 is greater than the length of the container wall 5 more container walls 5 can be assembled on the disc element 2, using the shaped profile 18 belonging to one wall 5 to join up to the 19 belonging to another wall 5 contiguous to the other.

When the coupling process of the disc element 2 to the container wall or walls 5 is finished, the volume inside the container can be subdivided using at least one separator wall 6.

The assembly stage requires insertion by pressure fit of the second plurality of hook 20 to the plurality of radial eyelets 10 present on the disc element 2.

Before finalising the blocking of the separator wall 6 on the disc element 2 the hooking body 21 is hooked onto the first side 6a of the separator wall 6 on the container wall 5.

According to needs and considering the type of mollusc to be farmed, the user can decide how many separator walls 6 to apply on the disc element 2.

At this point the support hub 4 is coupled to the disc element 2, centring the plurality of pins 16 on the flange 14 of the hub 4 on the plurality of holes 8 afforded on the disc element 2, by sliding the at least a tab 15 on the at least a notch 7.

During the sliding of the support hub 4 into the central hole 3 of the disc element 2 the shaped profile 18, present on the at least a separator wall 6, will engage internally of the at least a notch 7 having a countershaped conformation to the shaped profile 18.

Once this stage is completed the basket is completely assembled.

Several baskets can be stacked on top of one another, by coupling several support hubs 4, inserting the first end 12a of the first tubular tract 12 of a hub 4 into the second tubular tract 13 of another hub 4.

By insertion a wire inside the column of hubs 4 and using a terminating washer at the base, the immersion and raising of a column of the containers in the ocean can be facilitated.

During this stacking stage the plurality of centring elements 11 and the pair of spokes 22 belonging to the disc element 2 come into play.

The centring elements 11 at the position of the pair of spokes 22 define a hollow space in the shape of a circular crown having a width which is equal to the lateral containment wall 5.

In this way the cooperation of the centring elements 11 and the pair of spokes 22 enables the disco element 2 of a first basket to be rested on the container wall 5 of another basket 1, located below the first basket, with no difficulty, thus avoiding a blind insertion of one basket onto another.

Thus, when a column of baskets is raised the weights are distributed over the support hubs 4, the plurality of centring elements 11 and the pair of spokes 22, preventing basket-flexing phenomena which would emerge should the only contact element between a basket and another be the means for support 4; thus loss of product is also avoided, as the molluscs upon the baskets' flexing would drift out to sea.

Furthermore, the plurality of centring elements 11, being separated by a series of chambers, enable an improved circulation of water.

If the upper basket has its disc element 2 covered not only with shellfish but also seaweed or other impurities, the movement of water from inside to outside of the basket 1 is partially obstructed.

Thanks to the geometrical configuration of the plurality of centring elements 11 the water also circulates in a descending direction, that is from the top of the basket 1 towards the bottom of the basket 1.

The conformation of the basket therefore constitutes a further advantage of considerable importance, as the plurality of centring elements 11 enable a better circulation of water internally of the basket 1.

Also, transport and despatch costs of a batch of baskets 1 are considerably reduced, as they are sent unassembled and are constituted by stackable flat elements, saving much space.

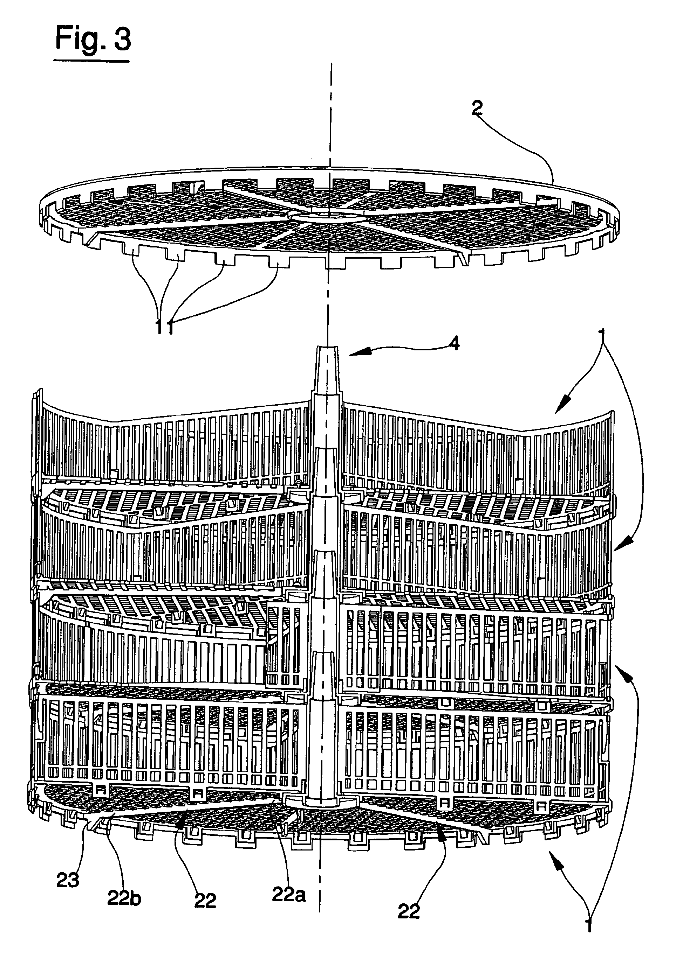

A further advantage is constituted by the possibility of using a final disc element 2 as a covering element (figure 3) without having to use special structures.

A further advantage is constituted by the fact that the regular cylindrical conformation of the basket 1 facilitates basket cleaning operations.

## Claims

1. A basket for open-sea shellfish farming, comprising:
a disc element (2) which is perforated and flat;
a support hub (4), coaxial and coupled to the disc element (2);
at least a container wall (5) having a net structure connected to a periphery of the disc element (2);
at least a separator wall (6) having a net structure and being engageable to the disc element (2);
wherein the container wall (5) and the separator wall (6) are removable from the disc element (2).

2. The basket of claim 1, wherein in a preferred embodiment the support hub (4) is removable from the disc element (2).

3. The basket of claim 1, wherein the disc element (2) comprises:
a central hole (3) having at least a notch (7) developing from a periphery towards an outside of the central hole (3);
a plurality of holes (8), each having a centre on a circumference which is concentric of the disc element (2) and being bigger than the central hole (3);
a plurality of circumferential eyelets (9) located on an external diameter of the disc element (2);
a plurality of radial eyelets (10) located along diameter lines of the disc element (2);
a plurality of centring elements (11) having a development direction which extends from a plane of the disc element (2) in a downwards direction when the disc element (2) is horizontally oriented;
at least a pair of spokes (22) connected below the disc element (2) and having a linear development, each exhibiting a first end (22a) close to the central hole (3) and a second end (22b) at an external periphery of the disc element (2), the second end (22b) terminating in a wedge-shaped rise (23).

4. The basket of claim 1, wherein the support hub (4) comprises:
a first tubular tract (12) having a vertical-axis truncoconical shape and being positioned in such a way that a greater diameter (12a) thereof is lower than a smaller diameter (12b) thereof;
a second tubular tract (13) having a truncocylindrical shape and exhibiting a first end (13a) having an external diameter which is greater than the greater diameter (12a) and being connected in proximity of the greater diameter (12a) and a second end (13b) to a flange (14);
at least a tab (15) connected externally along an external wall of the second tract (13) and having a parallel development thereto;
a plurality of pins (16) connected perpendicularly to the flange (14).

5. The basket for open-sea shellfish farming of claim 3 or 4, wherein the support hub (4) is couplable to the central hole (3) of the disc element (2).

6. The basket of claim 3 or 4, wherein the at least a tab (15) of the support hub (4) is slidably engageable to the at least a notch (7) of the central hole (3).

7. The basket of claim 3 or 4, wherein the plurality of pins (16) is couplable by a pressure fit to the plurality of holes (8) of the disc element (2).

8. The basket of claim 1 or 3, wherein the at least a container wall (5) inferiorly exhibits a first plurality of hooks (17) engageable by press fitting to the plurality of circumferential eyelets (9) of the disc element (2).

9. The basket of claim 1, wherein the at least a container wall (5) exhibits a first end (5a) which terminates in a shaped profile (18) and an opposite end (5b) which terminates with a guide (19), counter-shaped to the first shaped profile (18), the shaped profile (18) and the guide (19) being able to achieve a slidable coupling of the first end (5a) with the opposite end (5b) of the container wall (5), defining a ring.

10. The basket of claim 1 or 3, wherein the at least a separator wall (6) inferiorly exhibits a second plurality of hooks (20) engageable by press fitting to the plurality of radial eyelets (10) of the disc element (2).

11. The basket of claim 1, wherein the at least a separator wall (6) terminates at a first end (6a) with a hook-shaped hooking body (21) which can engage with the at least a container wall (5).

12. The basket of claim 1 or 4, wherein the at least a separator wall (6) terminates on a second side (6b) thereof in a shaped profile (18) which is couplable by sliding internally of the at least a tab (15) of the support hub (4).

13. The basket of claim 4, wherein the basket (1) can be stacked on another basket (1) by a coupling of the first tubular tract (12) of a support hub (4) to an inside of the second tubular tract (13) of a further support hub (4) overlying the preceding basket (1).

14. The basket of claim 1, wherein the basket (1) exhibits an external diameter which is greater than 45 centimetres.

15. The basket of claim 3 and 9, wherein a difference between an external diameter of the pair of spokes (22) and an internal diameter of the plurality of centring elements (11) defines a hollow space having an area which is equal to an area of the ring defined by the lateral container wall (5) when closed up.

16. The basket of claim 1, wherein the basket (1) exhibits a regular cylindrical shape.

## Patentansprüche

1. Korb für Schalentierzucht, enthaltend:
- ein scheibenförmiges Element (2), welches perforiert und flach ist;
- eine Trägernabe (4), koaxial zu dem scheibenförmigen Element (2) und mit diesem verbunden;
- wenigstens eine Behälterwand (5) von einer Netzstruktur, angeschlossen an einen umlaufenden Rand des scheibenförmigen Elementes (2);
- wenigstens eine Trennwand (6) von einer Netzstruktur, einsetzbar in das scheibenförmige Element (2);
wobei die Behälterwand (5) und die Trennwand (6) von dem scheibenförmigen Element (2) abnehmbar sind.

2. Korb nach Patentanspruch 1, bei welchem in einer vorgezogenen Ausführung die Trägernabe (4) von dem scheibenförmigen Element (2) abnehmbar ist.

3. Korb nach Patentanspruch 1, bei welchem das scheibenförmige Element (2) wie folgt enthält:
- eine mittlere Bohrung (3) mit wenigstens einer Kerbe (7), die sich von einem Umlauf in Richtung einer Aussenseite der mittleren Bohrung (3) erstreckt;
- eine Anzahl von Bohrungen (8), jede mit der Mitte an einem Umfang, der konzentrisch zu dem scheibenförmigen Element (2) ist, und grösser als die mittlere Bohrung (3);
- eine Anzahl von umlaufenden Schlitzen (9), angeordnet an einem äusseren Durchmesser des scheibenförmigen Elementes (2),
- eine Anzahl von radialen Schlitzen (10), angeordnet entlang von diametralen Linien des scheibenförmigen Elementes (2);
- eine Anzahl von Zentrierelementen (11) mit einer Ausdehnungsrichtung, welche sich von einer Ebene des scheibenförmigen Elementes (2) aus in einer nach unten verlaufenden Richtung erstreckt, wenn das scheibenförmige Element (2) horizontal orientiert ist;
- wenigstens ein Paar von Speichen (22), befestigt unter dem scheibenförmigen Element (2) und mit einer linearen Ausdehnung, wobei jede ein erstes Ende (22a) dicht an der mittleren Bohrung (3) und ein zweites Ende (22b) an einem äusseren Umlauf des scheibenförmigen Elementes (2) aufweist, und wobei das zweite Ende (22b) mit einem keilförmigen Ansatz (23) endet.

4. Korb nach Patentanspruch 1, bei welchem die Trägernabe (4) wie folgt enthält:
- einen ersten rohrförmigen Abschnitt (12) mit vertikaler Achse und von stumpfkegelförmiger Ausbildung, wobei er auf solche Weise positioniert ist, dass ein grösserer Durchmesser (12a) desselben tiefer liegt als ein kleinerer Durchmesser (12b) desselben;
- einen zweiten rohrförmigen Abschnitt (13) von einer stumpfkegelförmigen Ausbildung und ein erstes Ende (13a) aufweisend, das einen Aussendurchmesser hat, welcher grösser ist als der grössere Durchmesser (12a) und dicht an dem grösseren Durchmesser (12a) angeschlossen ist, sowie ein zweites Ende (13b), angeschlossen an einen Flansch (14);
- wenigstens einen Flügel (15), der aussen entlang einer äusseren Wand des zweiten Abschnittes (13) angebracht ist und eine parallele Ausdehnung zu diesem hat;
- eine Anzahl von Zapfen (16), angeordnet lotrecht zu dem Flansch (14).

5. Korb für Schalentierzucht im offenen Meer nach Patentanspruch 3 oder 4, bei welchem die Trägemabe (4) mit der mittleren Bohrung (3) des scheibenförmigen Elementes (2) verbindbar ist.

6. Korb nach Patentanspruch 3 oder 4, bei welchem sich der wenigstens eine Flügel (15) der Trägernabe (4) gleitbar mit wenigstens einer Kerbe (7) der mittleren Bohrung (3) verbinden kann.

7. Korb nach Patentanspruch 3 oder 4, bei welchem die Anzahl von Zapfen (16) durch Druckbefestigung mit der Anzahl von Bohrungen (8) des scheibenförmigen Elementes (2) verbindbar ist.

8. Korb nach Patentanspruch 1 oder 3, bei welchem die wenigstens eine Behälterwand (5) unten eine erste Anzahl von Haken (17) aufweist, verbindbar durch Druckbefestigung mit der Anzahl von umlaufenden Schlitzen (9) des scheibenförmigen Elementes (9).

9. Korb nach Patentanspruch 1, bei welchem die wenigstens eine Behälterwand (5) ein erstes Ende (5a) aufweist, welches mit einem geformten Profil (18) endet, und ein entgegengesetztes Ende (5b), welches mit einer Führung (19) endet, gegengeformt zu dem ersten geformten Profil (18), wobei das geformte Profil (18) und die Führung (19) in der Lage sind, eine gleitbare Verbindung des ersten Endes (5a) mit dem zweiten Ende (5b) der Behälterwand (5) herzustellen und einen Ring zu bilden.

10. Korb nach Patentanspruch 1 oder 3, bei welchem die wenigstens eine Trennwand (6) unten eine zweite Anzahl von Haken (20) aufweist, verbindbar durch Druckbefestigung mit der Anzahl von radialen Schlitzen (10) des scheibenförmigen Elementes (2).

11. Korb nach Patentanspruch 1, bei welchem die wenigstens eine Trennwand (6) an einem ersten Ende (6a) mit einem hakenförmigen Körper (21) endet, welcher sich mit der wenigstens einen Behälterwand (5) verbinden kann.

12. Korb nach Patentanspruch 1 oder 4, bei welchem die wenigstens eine Trennwand (6) an einem zweiten Ende (6b) mit einem geformten Profil (18) endet, welches gleitbar in den wenigstens einen Flügel (15) der Trägernabe (4) eingesetzt werden kann

13. Korb nach Patentanspruch 4, bei welchem der Korb (1) auf einem anderen Korb (1) gestapelt werden kann, und zwar durch Verbinden des ersten rohrförmigen Abschnittes (12) einer Trägernabe (4) mit dem Inneren des zweiten rohrförmigen Abschnittes (13) einer weiteren Trägernabe (4), angeordnet über dem vorausgehenden Korb (1).

14. Korb nach Patentanspruch 1, bei welchem der Korb (1) einen äusseren Durchmesser aufweist, welcher grösser als 45 cm ist.

15. Korb nach Patentanspruch 3 und 9, bei welchem der Unterschied zwischen einem Aussendurchmesser des Paares von Speichen (22) und einem Innendurchmesser der Anzahl von Zentrierelementen (11) einen Hohlraum mit einem Bereich beschreibt, welcher einem Bereich des Ringes entspricht, beschrieben durch die seitliche Behälterwand (5), wenn diese geschlossen ist.

16. Korb nach Patentanspruch 1, bei welchem der Korb (1) eine gleichmässige zylindrische Form aufweist.

## Revendications

1. Panier pour la culture en haute-mer de mollusques, comprenant:
- un disque (2) perforé et plat;
- un moyeu de support (4), coaxial et accouplé au disque (2);
- au moins une paroi de contenance (5) ayant une structure réticulaire connectée à une périphérie du disque (2);
- au moins une paroi de séparation (6) ayant une structure réticulaire et étant engageable dans le disque (2);
dans lequel la paroi de contenance (5) et la paroi de séparation (6) sont amovibles par rapport au disque (2).

2. Panier selon la revendication 1, dans lequel, dans une forme de réalisation préférée, le moyeu de support (4) est amovible par rapport au disque (2).

3. Panier selon la revendication 1, dans lequel le disque (2) comprend:
- un orifice central (3) ayant au moins une entaille (7) se développant d'une périphérie vers une partie externe de l'orifice centrale (3);
- une pluralité d'orifices (8), chacun ayant un centre sur une circonférence concentrique du disque (2) et étant plus grand que l'orifice central (3);
- une pluralité d'oeillets circonférentiels (9) situés sur un diamètre externe du disque (2);
- une pluralité d'oeillets radiaux (10) situés le long de lignes diamétrales du disque (2);
- une pluralité d'éléments de centrage (11) ayant une direction de développement qui s'étend d'un plan du disque (2) dans une direction vers le bas lorsque le disque (2) est orienté horizontalement;
- au moins une paire de rayons (22) connectés au-dessous du disque (2) et ayant un développement linéaire, chacun présentant une première extrémité (22a) proche de l'orifice central (3) et une seconde extrémité (22b) en correspondance d'une périphérie externe du disque (2), la seconde extrémité (22b) terminant en un soulèvement cunéiforme (23).

4. Panier selon la revendication 1, dans lequel le moyeu de support (4) comprend:
- une première partie tubulaire (12) ayant un axe vertical en forme de tronc de cône et étant positionnée de manière à ce que son diamètre supérieur (12a) soit plus bas que son diamètre inférieur (12b);
- une seconde partie tubulaire (13) ayant une forme en tronc de cône et présentant une première extrémité (13a) ayant un diamètre externe supérieur au diamètre supérieur (12a) et étant connectée à proximité du diamètre supérieur (12a), et une seconde extrémité (13b) terminant par une collerette (14);
- au moins une ailette (15) connectée extérieurement le long d'une paroi externe de la seconde partie (13) et ayant un développement parallèle à cette dernière;
- une pluralité de broches (16) connectées perpendiculairement à la collerette (14).

5. Panier pour la culture en haute-mer de mollusques selon la revendication 3 ou 4, dans lequel le moyeu de support (4) peut être accouplé à l'orifice central (3) du disque (2).

6. Panier selon la revendication 3 ou 4, dans lequel l'au moins une ailette (15) du moyeu de support (4) est engageable de manière coulissante dans au moins une entaille (7) de l'orifice central (3).

7. Panier selon la revendication 3 ou 4, dans lequel la pluralité de broches (16) peut être accouplée par insertion en pression à la pluralité d'orifices (8) du disque (2).

8. Panier selon la revendication 1 ou 3, dans lequel l'au moins une paroi de contenance (5) présente inférieurement une première pluralité de crochets (17) pouvant être engagés par insertion en pression dans la pluralité d'oeillets circonférentiels (9) du disque (2).

9. Panier selon la revendication 1, dans lequel l'au moins une paroi de contenance (5) présente une première extrémité (5a) qui termine en un profil de forme déterminée (18) et une extrémité opposée (5b) qui termine en un guide (19), contre-formé par rapport au premier profil (18), le profil (18) et le guide (19) pouvant former un accouplement coulissant de la première extrémité (5a) avec l'extrémité opposée (5b) de la paroi de contenance (5), en définissant un anneau.

10. Panier selon la revendication 1 ou 3, dans lequel l'au moins une paroi de séparation (6) présente inférieurement une seconde pluralité de crochets (20) pouvant être engagés par insertion en pression dans la pluralité d'oeillets radiaux (10) du disque (2).

11. Panier selon la revendication 1, dans lequel l'au moins une paroi de séparation (6) termine en une première extrémité (6a) avec un corps d'accrochage en forme de crochet (21) pouvant s'engager avec l'au moins une paroi de contenance (5).

12. Panier selon la revendication 1 ou 4, dans lequel l'au moins une paroi de séparation (6) termine sur son second côté (6b) en un profil (18) de forme déterminée pouvant être accouplé par coulissement intérieurement à l'au moins une ailette (15) du moyeu de support (4).

13. Panier selon la revendication 4, dans lequel le panier (1) peut être empilé sur un autre panier (1) par un accouplement de la première partie tubulaire (12) d'un moyeu de support (4) à une partie interne de la seconde partie tubulaire (13) d'un autre moyeu de support (4) superposé au panier (1) précédent.

14. Panier selon la revendication 1, dans lequel le panier (1) présente un diamètre externe supérieur à 45 centimètres.

15. Panier selon les revendications 3 et 9, dans lequel une différence entre un diamètre externe de la paire de rayons (22) et un diamètre interne de la pluralité d'éléments de centrage (11) définit un espace vide ayant une aire égale à une aire de l'anneau défini par la paroi de contenance latérale (5) lorsqu'elle est refermée sur elle-même.

16. Panier selon la revendication 1, dans lequel le panier (1) présente une forme cylindrique régulière.
